# EUROPÄISCHE PATENTANMELDUNG

(11) **EP 0 833 306 A1**
(43) Veröffentlichungstag der Anmeldung: **01.04.1998**
(21) Anmeldenummer: 97121492.9
(22) Anmeldetag: 25.01.1994
(51) Int. Cl.: G11B 3/04

(54) **CD-Kassette mit Klemmhalterung**

(30) Priorität: 27.01.1993 DE 4302236; 19.11.1993 DE 4339335; 08.12.1993 DE 4341763
(62) Teilanmeldung aus: 94101030.8
(71) Anmelder: Luckow, Hans-Jürgen, D-24558 Henstedt-Rhen (DE)
(72) Erfinder: Luckow, Hans-Jürgen, D-24558 Henstedt-Rhen (DE)
(74) Vertreter: Klickow, Hans-Henning

(57) **Zusammenfassung**

Die Kassette dient zur Aufbewahrung von Compact-Discs und weist eine Unterschale, eine Oberschale und ein Innenteil auf. Das Innenteil ist in einer Scharnieranordnung klappbar zwischen der Unterschale und der Oberschale gehalten. Der Innenteil weist Einrichtungen zur klemmenden Halterung wenigstens einer Compact-Disc auf. Der Innenteil ist zur Halterung einer Compact-Disc im Bereich deren Mittelaussparung mit Querstegen versehen, die sich quer zu einer Haltplatte des Innenteiles erstrecken. Die Querstege sind entlang eines Umfanges einer Öffnung angeordnet. Die Querstege sind abwechselnd in entgegengesetzten Richtungen mit Radialstegen versehen. Die Radialstege sind ausgehend vom Quersteg in Richtung auf einen Mittelpunkt der Öffnung ausgerichtet. Die Querstege erheben sich in einander abgewandte Richtungen mit Querstegsegmenten, die im Bereich ihrer dem Mittelpunkt abgewandten Seiten beide eine Klemmprofilierung zur Halterung der Compact-Disc aufweisen.

## Beschreibung

Die Erfindung betrifft eine Kassette zur Aufbewahrung von Compact-Discs mit einer Unterschale, einer Oberschale und einem Innenteil, der in einer Scharnieranordnung klappbar zwischen der Unterschale und der Oberschale gehalten ist und bei der der Innenteil Einrichtungen zur klemmenden Haltung wenigstens einer Compact-Disc aufweist.

Es sind bereits Kassetten mit Klemmhalterung bekannt, die insgesamt gute und funktionsgerechte Eigenschaften aufweisen. Es zeigt sich jedoch, daß die Handhabung bei einer Entnahme der Compact-Discs sowie bei einem Einfügen der Compact-Discs in die Klemmelemente noch verbessert werden kann.

Solche Kassetten dienen der Aufbewahrung und dem Transport von Compact-Discs (CDs). Sie schützen diese vor Staub und sonstigen Umwelteinflüssen. Es sind auch aus offenkundiger Vorbenutzung Hüllen für die Aufbewahrung lediglich einer CD bekannt, bei denen der die CD haltende Innenteil nicht klappbar, sondern über Rastverbindungen mit der Unterschale fest verbunden ist. Dieser Innenteil, auch "Tray" genannt, wird in entsprechenden Maschinen automatisch mit der CD bestückt und dann in die Unterschale der Kassette eingerastet.

Aus der DE 88 10 917 U1 ist eine Kassette zur Aufbewahrung von zwei CDs bekannt, bei der der Innenteil zwischen der Ober- und Unterschale klappbar ist und beidseitig Halteeinrichtungen für eine CD aufweist. Diese Kassette ermöglicht das Aufbewahren von zwei CDs, weist aber die Außenabmessungen einer gebräuchlichen Kassette für eine CD auf. Wenn mehr als zwei CDs in einer Kassette aufbewahrt werden sollen, kommen aufwendige und verhältnismäßig voluminöse Konstruktionen zum Einsatz, beispielsweise entsprechend der DE 33 01644 A1. Bei dieser Kassette ist der Innenteil als Mittelschale ausgebildet und trägt auf jeder Seite eine CD, zusätzlich sind an der Ober- und Unterschale noch jeweils Halterungen für eine CD vorgesehen. Allen diesen Kassetten ist gemeinsam, daß die CD auf einer Lagerplatte liegt und im Bereich ihres Mittellochs gehaltert wird.

Aufgabe der vorliegenden Erfindung ist es, eine Kassette der einleitend genannten Art derart zu verbessern, daß die Handhabung bei einem Einsetzen und einer Entnahme von Compact-Discs verbessert wird.

Diese Aufgabe wird erfindungsgemäß dadurch gelöst, daß der Innenteil zur Halterung einer Compact-Disc im Bereich deren Mittelaussparung Querstege aufweist, die sich quer zu einer Halteplatte des Innenteiles erstrecken und entlang eines Umfanges einer Öffnung angeordnet sind und daß die Querstege abwechselnd in entgegengesetzten Richtungen mit Radialstegen versehen sind, die ausgehend vom Quersteg in Richtung auf einen Mittelpunkt der Öffnung ausgerichtet sind und daß sich die Querstege in die einander abgewandten Richtungen mit Querstegsegmenten erheben, die im Bereich ihrer dem Mittelpunkt abgewandten Seiten beide eine Klemmprofilierung zur Halterung der Compact-Disc aufweisen.

Die erfindungsgemäße Kassette kann so ausgebildet sein, daß sie die Außenabmessungen einer handelsüblichen Einzelverpackung für Compact-Discs aufweist und dennoch zur Aufnahme von zwei CDs eingerichtet ist. Der Innenteil ist zweckmäßigerweise buchartig zwischen Ober- und Unterschale klappbar, seine Scharnierachse liegt also an der gleichen Seitenkante wie die Scharnierachse von Ober- und Unterschale. Es ist aber auch möglich, die Scharnierachse des Innenteils an der der Scharnierachse von Ober- und Unterschale gegenüberliegenden Seitenkante anzuordnen.

Die erfindungsgemäße Kassette wird zweckmäßigerweise aus einem harten Kunststoff gefertigt. Die Ober- sowie Unterschale bestehen vorteilhafterweise aus einem durchsichtigen Kunststoff, wie zum Beispiel glasklarem Polystyrol.

Wenn in den Ansprüchen und der Beschreibung von einer Compact-Disc beziehungsweise von einer CD die Rede ist, so soll dieser Begriff im Rahmen der Erfindung auch andere flache, scheibenförmige Speichermedien mit umfassen, beispielsweise Disketten, Chipkarten oder ähnliches.

Zur definierten Positionierung des Innenteiles in einer Benutzungsposition wird vorgeschlagen, daß zur Fixierung des Innenteiles relativ zur Unterschale in einer aufgeklappten Positionierung ein zu einer Rastausnehmung korrespondierender Rastvorsprung vorgesehen ist.

Insbesondere ist bei der Ausbildung der Rasteinrichtung daran gedacht, daß der Rastvorsprung im Bereich des Innenteiles angeordnet ist und in einer geschlossenen Positionierung von einer Rastausnehmung aufnehmbar ist, die im Bereich eines Seitenwandstückes der Unterschale angeordnet ist.

Eine andere Ausgestaltung kann aber auch darin bestehen, daß der Rastvorsprung als Teil des Seitenwandstückes ausgebildet ist und in einer geöffneten Positionierung des Innenteiles in eine Rastausnehmung eingreift, die im Bereich des Innenteiles angeordnet ist.

In der Zeichnung sind Ausführungsbeispiele der Erfindung schematisch dargestellt. Es zeigen:
- Fig. 1: eine teilweise Darstellung einer Halterung des Innenteils relativ zur Unterschale,
- Fig. 2: eine teilweise Darstellung eines Trays zur klemmenden Halterung von Compact-Discs im Bereich deren Zentralausnehmung,
- Fig. 3: eine Draufsicht auf ein Tray, das mit den Halterungen gemäß Fig. 3 ausgestattet ist,
- Fig. 4: eine buchförmig aufklappbare Vorrichtung zur Halterung von Compact-Discs mit Schwenkwinkelbegrenzung für das Tray,
- Fig. 5: eine Prinzipdarstellung einer Mitnahmeeinrichtung zum definierten Aufklappen des Trays bei einem Öffnen des Deckels der Verpackung,
- Fig. 6: eine modifizierte Ausbildung der Vorrichtung zur klemmenden Halterung der Compact-Disc,
- Fig. 7: eine Oberschale gemäß einer anderen Ausführungsform,
- Fig. 8: eine Unterschale, die korrespondierend zur Oberschale von Fig. 7 konstruiert ist,
- Fig. 9: eine Draufsicht zur Veranschaulichung einer Durchdringung des Innenteiles und der Unterschale zur Ermöglichung einer Mitnahmefunktion bei einem Aufklappen der Oberschale,
- Fig. 10: eine perspektivische Darstellung einer Kassette mit einem Tray zur klemmenden Halterung einer Compact-Disc im Bereich deren Mittelaussparung,
- Fig. 11: eine Seitenansicht der Kassette gemäß Fig. 10,
- Fig. 12: eine Draufsicht auf das Innenteil gemäß Fig. 11
**und**
- Fig. 13: eine Darstellung entsprechend Fig. 11 mit modifizierter Ober- und Unterschale und Tray.

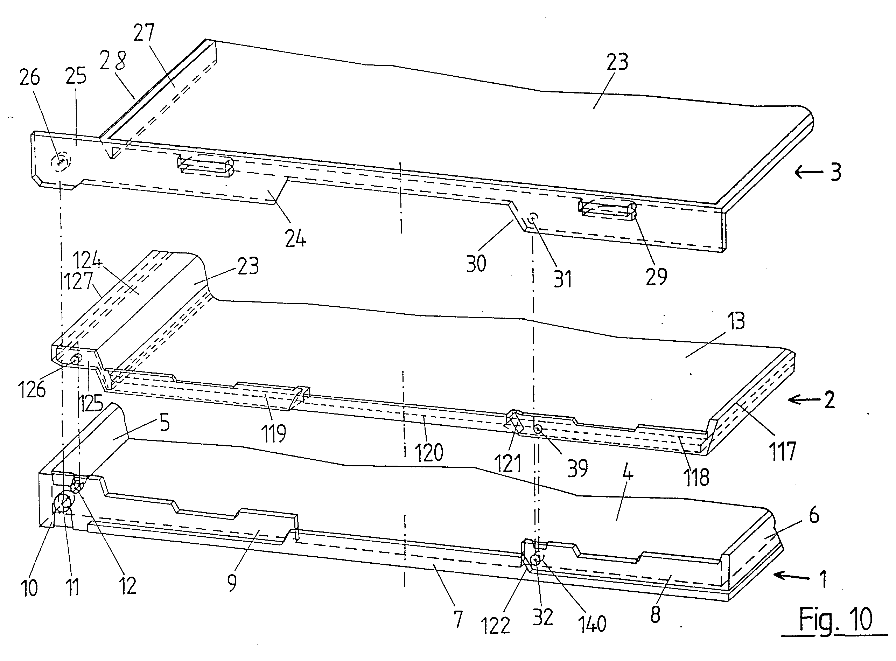

Die erfindungsgemäße CD-Kassette gemäß Fig. 10 bis Fig. 13 umfaßt eine Unterschale (1), einen Innenteil (2) und eine Oberschale (3). Die Unterschale (1) weist eine Bodenplatte (4) auf, an deren Kanten sich der Rückenwandteil (5), der vordere Wandteil (6), die Seitenwandstücke (7), Stege (8,9) sowie die Scharnierwandstücke (10) senkrecht aus der Bodenplattenebene erheben. Die Scharnierwandstücke (10) sind einstückig mit den Stegen (9) verbunden und stehen in Eckverbindung mit dem Rückenwandteil (5). Die Stege (8,9) sind bezüglich der Seitenwandstücke (7) etwas einwärts versetzt. Die Scharnierwandstücke (10) weisen je eine Bohrung (11) und eine Bohrung (12) auf, die zur Aufnahme der Scharnierzapfen der Oberschale (3) beziehungsweise des Innenteils (2) dienen. Der Innenteil (2) weist eine Halteplatte (13) auf.

Aus der rückwärtigen Seite der Halteplatte (13) ist eine einen stumpfen Winkel mit der Halteplatte (13) einschließende Schrägwand (18) angeordnet, die eine parallel zur Halteplatte (13) verlaufende, sich nach außen erstreckende Rückenrandplatte (19) trägt. Die Rückenrandplatte (19) trägt an ihren den Scharnierwandstücken (10) der Unterschale (1) zugewandten Enden zwei Scharnierwandteile (20) mit je einem Scharnierzapfen (21), die in die Bohrungen (12) der Scharnierwandstücke (10) eingreifen. Die Scharnierwandteile (20) des Innenteils (2) werden dabei von den Scharnierwandstücken (10) der Unterschale (1) umschlossen.

Der Abstand der Scharnierzapfen (21) von der rückwärtigen Kante (22) der Rückenrandplatte (19) ist kleiner als der Abstand der Bohrung (12) vom Rückenwandteil (5) und der Bodenplatte (4), so daß ein unbehindertes Umklappen des Innenteils (2) um die durch die Scharnierzapfen (21) und die Bohrungen (12) gebildete Achse möglich ist. Beim vollständigen Umklappen des Innenteils (2) schlägt die Halteplatte (13) an der Oberkante des Rückenwandteils (5) an. Durch die versetzte Anordnung der Rückenrandplatte (19) mit den die Scharnierzapfen (21) aufweisenden Scharnierwandteilen (20) gegenüber der Ebene der Halteplatte (13) schlägt dieselbe erst bei einem Umklappen um 180° oder mehr an den Rückenwandteil (5) an. Der Innenteil (2) ist daher wie eine Buchseite vollständig umklappbar.

Die Oberschale (3) weist eine Deckplatte (23) auf, an der sich an zwei gegenüberliegenden Kanten schmalseitige Wände (24) senkrecht aus der Deckplattenebene erheben. Diese schmalseitigen Wände (24) sind einstückig mit Scharnierwandteilen (25) verbunden, die nach innen ragende Scharnierzapfen (26) aufweisen. Der den Scharnierwandteilen (25) zugewandte Rand der Deckplatte (23) weist eine in die gleiche Richtung wie die schmalseitigen Wände (24) ragende Leiste (27) auf und schließt mit den Scharnierwandteilen (25) eine Aussparung (28) ein. An den schmalseitigen Wänden (24) sind sich einwärts erstreckende Haltenasen (29) angeordnet, die zur Halterung einer in die Oberschale eingeschobenen, hier nicht dargestellt Einlegekarte dienen. Die Leiste (27) dient als Anschlag für diese Einlegekarte. Die schmalseitigen Wände (24) weisen je eine trapezförmige Aussparung (30) auf. Die Scharnierwandteile (25) der Oberschale (3) umgreifen von außen die Scharnierwandstücke (10) der Unterschale (1). Die Scharnierzapfen (26) ragen dabei in die Bohrungen (11). Im geschlossenen Zustand der Kassette wird die Aussparung zwischen dem Rückenwandteil (5) und der Kante der Deckplatte (23), die die Leiste (27) aufweist, durch die Rückenrandplatte (19) des Innenteils (2) ausgefüllt. Die Seitenwandstücke (7) der Unterschale (1) greifen formschlüssig in die Aussparungen (30) der schmalseitigen Wände (24) ein.

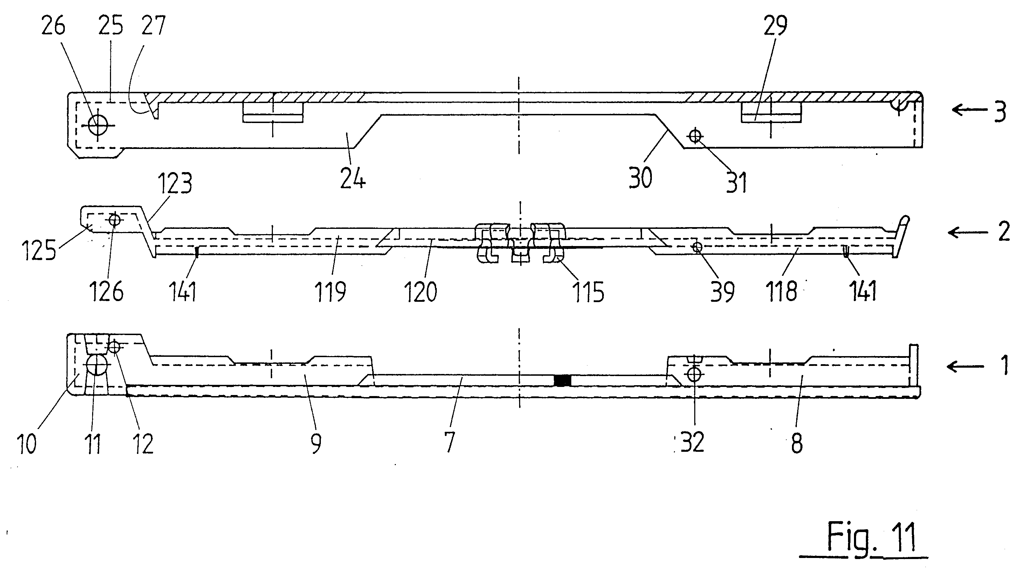

Man erkennt in Fig. 11, daß sich aufgrund der voneinander unabhängigen Scharnieranordnungen zur Verbindung der Unterschale (1) mit dem Innenteil (2) einerseits und der Unterschale (1) mit der Oberschale (3) andererseits der Innenteil zunächst separat mit CDs bestücken läßt und anschließend in die Kassette eingesetzt werden kann.

Die schmalseitigen Wände (24) der Oberschale (3) weisen an ihrer Innenseite je eine Rastnase (31) auf, die mit Ausnehmungen (32) in den Stegen (8) der Unterschale (1) als Rastverschluß zusammenwirken.

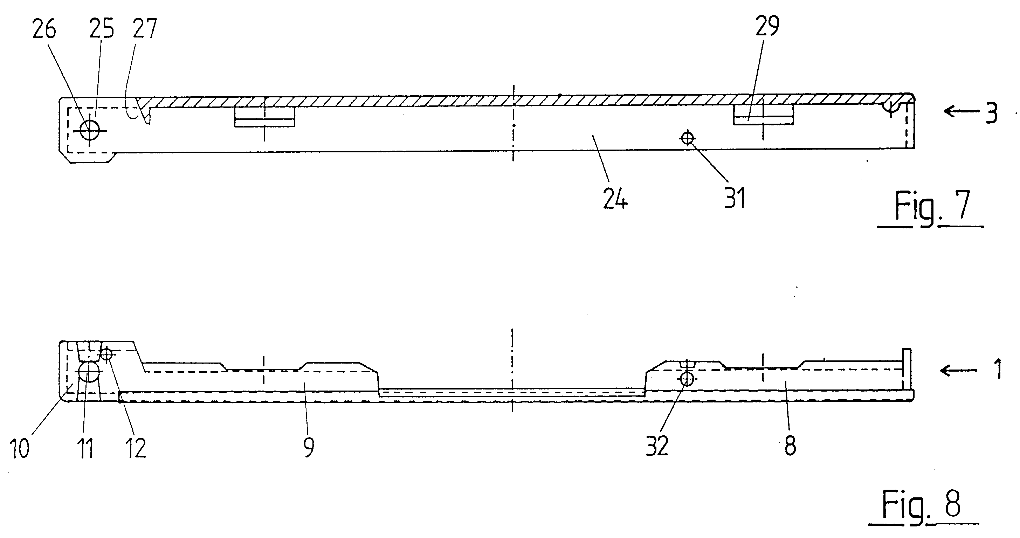

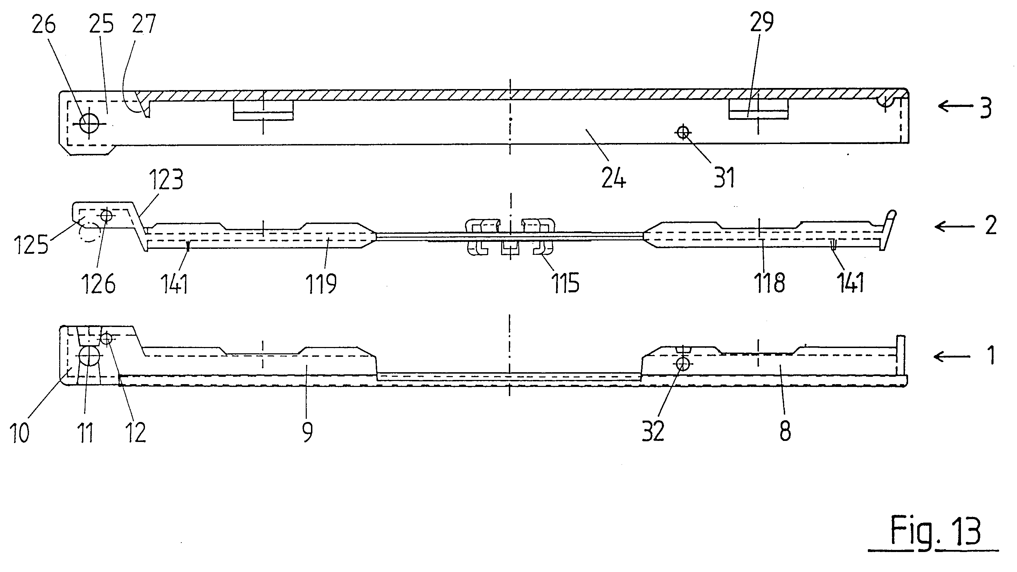

Fig. 7 und Fig. 8 zeigen eine weitere Ausführungsform der erfindungsgemäßen Kassette in einer Ansicht von der Seite. Der Einfachheit halber ist hier der Innenteil (2) nicht dargestellt. Er ist genauso ausgeführt, wie der Innenteil (2) der Fig. 11 oder 13. Die Unterschale (1) weist bei dieser Ausführungsform keine Seitenwandstücke auf. Die schmalseitigen Wände (24) der Oberschale (3) sind hier ohne Aussparung durchgehend ausgebildet. In den Figuren 11 bis 13 bezeichnen die nicht näher beschriebenen Bezugszeichen die gleichen Teile wie in Fig. 10.

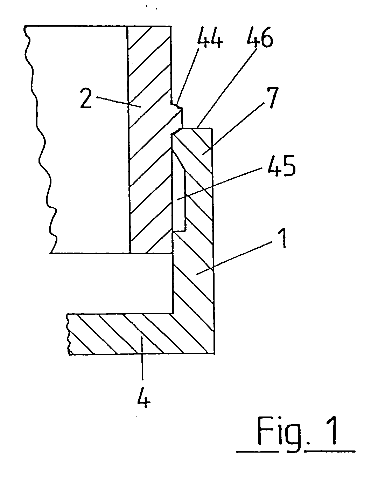

Gemäß der Ausführungsform in Fig. 1 ist eine zusätzliche Fixierung vorgesehen, um bei aufgeklappten Schalen (1,3) eine Positionierung des Innenteiles (2) in einer Entnahmepositionierung vorzusehen. Hierzu ist gemäß der Ausführungsform in Fig. 1 der Innenteil (2) mit einem Rastvorsprung (44) versehen, der in einer aufgeklappten Positionierung auf einer Oberkante (46) der Seitenwandstücke (7) der Unterschale (1) aufliegt.

In einer eingeschwenkten Positionierung kann der Rastvorsprung (44) von einer Rastausnehmung (45) aufgenommen sein. Die Rastausnehmung (45) ist im Bereich einer Innenseite des Seitenwandstückes (7) angeordnet. Grundsätzlich ist es ebenfalls denkbar, den Rastvorsprung (44) mit dem Seitenwandstück (7) zu verbinden und im Bereich des Innenteiles (2) eine Rastausnehmung (45) vorzusehen, in die der Rastvorsprung (44) bei dieser Ausführungsform in der geöffneten Positionierung eingreift. Zur Erleichterung der Positionierbewegungen werden der Rastvorsprung (44) und die Rastausnehmung (45) mit entsprechenden Ein- und Auslaufflanken versehen, die schräg angeordnet sind.

Ein weiterer Gedanke der Erfindung besteht darin, eine modulare Anordnung vorzusehen. Diese modulare Anordnung ist derart ausgebildet, daß stets gleiche Unterschalen (1) und Oberschalen (3) verwendet werden, die bedarfsabhängig mit unterschiedlichen Innenteilen (2) ausgestattet werden können. Darüber hinaus ist es aber auch denkbar, Innenteile vorzusehen, die grundsätzlich den Ausführungsformen gemäß P 33 01 644, GB 21 54 515, P 34 14 903 oder EP 0 430 956 entsprechen, jedoch an die Unterschale (1) und die Oberschale (3) angepaßte Geometrien aufweisen. Zusätzlich oder alternativ kann auch eine Ausstattung der Unterschale (1) oder Oberschale (3) mit Einsätzen erfolgen, die beispielsweise aus der EP 0 114 631 bekannt sind und ebenfalls zur klemmenden Halterung einer Compact-Disc dienen. Eine Anleitung zur Anpassung der Geometrien ist in der DE-OS 42 10 826.8 veröffentlicht. Hier wird veranschaulicht, wie das erfindungsgemäße modulare Konzept unterschiedlicher Innenteile (2) in standardisierten Gehäuseschalen (1,3) realisierbar ist.

Durch die modulare Ausbildung ist es also möglich, entweder ein klappbares buchartiges Teil zur Halterung der Compact-Discs im Bereich ihrer Zentralausnehmung (14) zu realisieren oder eine derartige Halterung der Compact-Discs im Bereich ihrer Zentralausnehmung im Bereich von Einsätzen für die Unterschale und die Oberschale vorzunehmen.

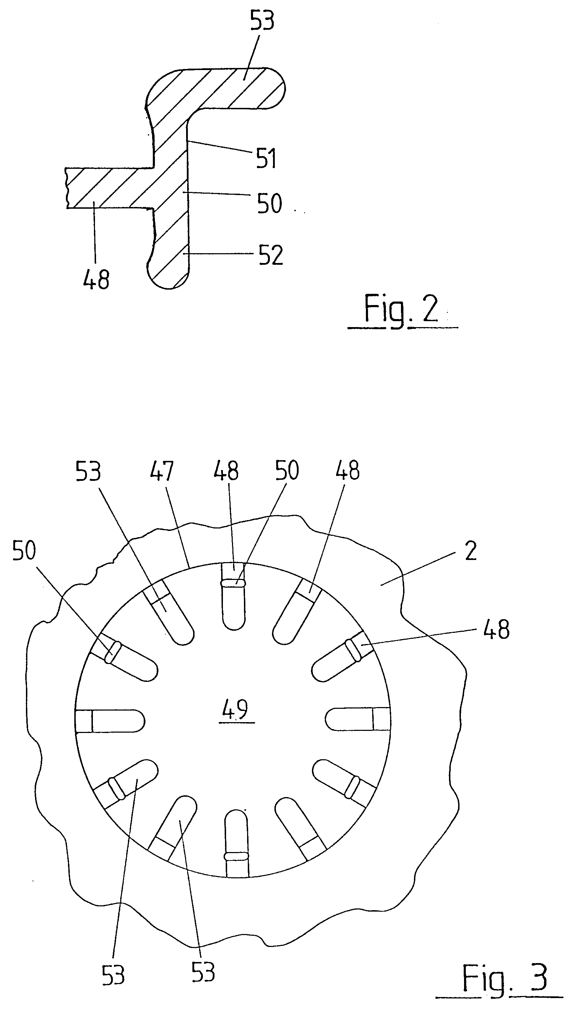

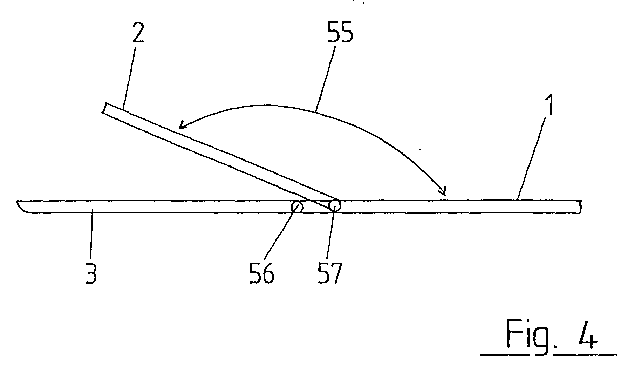

Bei einer Halterung der Compact-Discs im Bereich ihrer Zentralausnehmung besteht ein weiterer erfindungsgemäßer Gedanke darin, das Innenteil (2) mit zungenartigen Vorsprüngen zu versehen, die in einer Seitenansicht die Gestaltung gemäß Fig. 2 haben und eine Verteilung entsprechend der Draufsicht in Fig. 3 besitzen. Ausgehend von einem Innenrand (47) des Innenteiles (2) ragen Zungenstege (48) radial in eine Zentralausnehmung (49) des Innenteiles (2) hinein. Die Zungenstege (48) verlaufen im wesentlichen in einer vom plattenförmigen Innenteil (2) aufgespannten Ebene. In Richtung auf einen Mittelpunkt der Zentralausnehmung (49) schließt sich an den Zungensteg (48) ein Quersteg (50) an, der im Bereich seiner mittleren Ausdehnung vom Zungensteg (48) gehaltert ist. Im Bereich seiner dem Innenrand (47) zugewandten Ausdehnung weist der Quersteg (50) eine Kontur auf, die sich in eine dem Zungensteg (48) abgewandte Richtung leicht an den Innenrand (47) annähert. Hierdurch ist es möglich, eine klemmende Halterung von Compact-Discs vorzunehmen, die auf die von den Querstegen (50) aufgespannte ringförmige Kontur aufgesetzt werden. Der Quersteg (50) besteht somit aus zwei Querstegsegmenten (51,52), die im Bereich ihrer dem Zungensteg (48) zugewandten Ausdehnung ineinander übergeleitet sind. Das Querstegsegment (51) weist im Bereich seines dem Zungensteg (48) abgewandten Endes einen Radialsteg (53) auf, der sich in Richtung auf einen Mittelpunkt der Zentralausnehmung (49) erstreckt.

Das andere der Querstegsegmente (52) ist ohne einen derartigen Radialsteg (53) ausgebildet.

Insbesondere ist nun daran gedacht, bei einer Anordnung der Querstege (50) entlang des Innenrandes (47) eine abwechselnde Anordnung von Radialstegen (53) derart vorzunehmen, daß bei einer Draufsicht gemäß Fig. 3 in einer Richtung entlang des Innenrandes (47) abwechselnd ein Querstegsegment (51) mit Radialsteg (53) und ein Querstegsegment (52) ohne Radialsteg (53) angeordnet ist. Hierdurch wird sowohl eine gute Handhabbarkeit realisiert, als auch eine hinterschneidungsfreie Formgebung bei der Durchführung eines Sprizgußverfahrens realisiert.

Gemäß der Ausführungsform in Fig. 4 ist vorgesehen, für das Innenteil (2) einen Schwenkwinkel (55) derart definiert zu begrenzen, daß bei einer Öffnung der Oberschale (3) relativ zur Unterschale (1) um ca. 180° ein maximaler Schwenkwinkel des Innenteiles (3) relativ zur Unterschale (1) auf etwa 130° bis 150° begrenzt wird. Dies kann durch entsprechende Rastungen oder Vorsprünge im Randbereich des Innenteiles (2) beziehungsweise der Oberschale (3) erfolgen. Es ist dabei dafür Sorge zu tragen, daß bei einem Erreichen des maximalen Schwenkwinkels eine weitere Schwenkbewegung durch gegeneinandergrenzende Teile beendet wird.

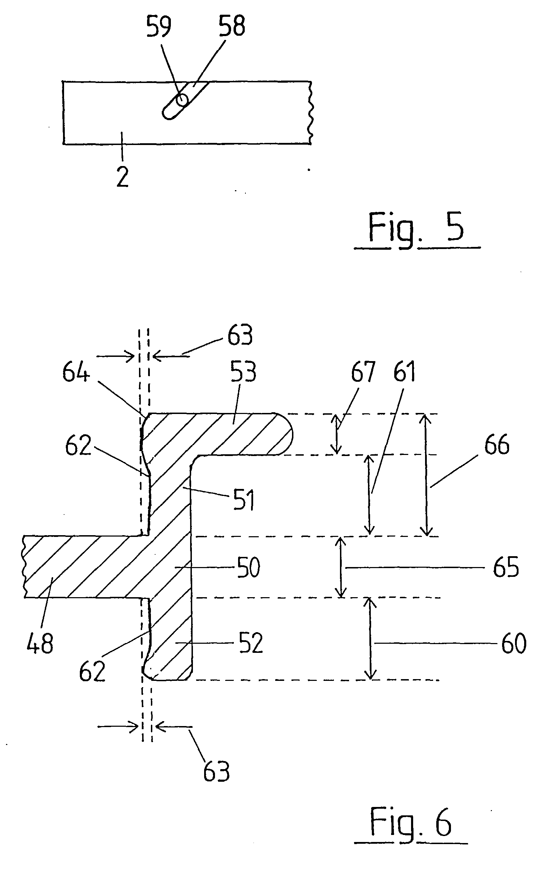

Gemäß der Ausführungsform in Fig. 5 ist daran gedacht, ein automatisches Aufklappen des Innenteiles (2) bei einer Öffnung der Oberschale (3) relativ zur Unterschale (1) vorzunehmen. Es wird hierbei ausgenutzt, daß Drehachsen der Oberschale (3) relativ zur Unterschale (1) sowie des Innenteiles (2) relativ zur Unterschale (1) versetzt zueinander angeordnet sind. Dies ist durch die Eintragung des Außenscharniers (56) und des Innenscharniers (57) gemäß Fig. 4 verdeutlicht. Bei einer Öffnungsbewegung der Oberschale (3) dreht sich somit das Innenteil (2) um eine andere Drehachse als die Oberschale (3). Wird somit beispielsweise im Bereich einer Seitenfläche des Innenteiles (2) eine Führungsnut (58) angeordnet, in die die Oberschale (3) mit einem Führungszapfen (59) eingreift, so wird bei einer Öffnungsbewegung der Oberschale (3) durch den in die Führungsnut (58) eingreifenden Führungszapfen (59) zunächst der Innenteil (2) mitverschwenkt. Durch die unterschiedlichen Bewegungsradien bewegt sich der Führungszapfen (59) in Richtung auf eine Öffnung der Führungsnut (58), aus die der Führungszapfen (59) ab einem Grenzwinkel austritt. Ab diesem Zeitpunkt wird eine weitere Verschwenkung des Innenteiles (2) durch die Oberschale (3) nicht mehr durchgeführt. Insbesondere ist es zweckmäßig, vor Erreichen des Trennens des Führungszapfen (59) von der Führungsnut (58) bereits ein Wirksamwerden des Rastvorsprunges (44) und der Rastausnehmung (45) vorzusehen. Hierdurch wird ein Zurückfallen des Innenteiles (2) vermieden. Alternativ ist es auch möglich, die Führungsnut (58) im Bereich der Oberschale (3) und den Führungszapfen (59) im Bereich des Innenteiles (2) anzuordnen.

Fig. 6 zeigt eine gegenüber Fig. 2 modifizierte Ausführungsform. Gemäß Fig. 6 ist das Querstegsegment (52) senkrecht zum Zungensteg (48) geringer dimensioniert als die Kombination aus dem Querstegsegment (51) und der Radialsteg (53). Eine Dimensionierung kann beispielsweise derart erfolgen, daß das Querstegsegment (52) mit einer Segmentlänge (60) versehen ist, die etwa einer Partiallänge (61) des Quersteges (51) entspricht, in deren Bereich sich der Quersteg (51) zwischen dem Zungensteg (48) und dem Radialsteg (53) erstreckt. Durch diese Dimensionierung wird eine Stapelbarkeit der Innenteile (2) bei einem Transport einer Vielzahl übereinander angeordneter Innenteile (2) verbessert. Es lassen sich deshalb auf geringerem Volumen eine größere Anzahl von Innenteilen (2) stapeln. Im Bereich der dem Zungensteg (48) zugewandten Begrenzungsflächen weisen die Querstege (51,52) Klemmprofilierungen (62) auf, die als in Richtung auf den Zungensteg (48) weisende Materialverdickungen ausgebildet sind. Insbesondere ist daran gedacht, die Klemmprofilierung (42) durch eine entsprechende Formgebung beim Spritzgußvorgang derart herzustellen, daß durch eine federelastische Verformung eine entsprechende leichte Entformbarkeit gegeben ist. Zur radialen Klemmung der Compact-Discs ist die Klemmprofilierung (62) mit einer Profilierungstiefe (63) versehen.

Bei einer abwechselnden Anordnung von Querstegen (51,52) erfolgt somit im Bereich jedes Quersteges (51,52) eine radiale klemmende Halterung und Abstützung der Compact-Discs, eine trichterartig geschwungene Einführungsfläche (64) wird jedoch nur bei den Querstegen (51) im Bereich der außenseitigen gerundeten Überleitung zu den Radialstegen (53) bereitgestellt. Dies erweist sich jedoch für eine Funktion als völlig ausreichend.

Eine Dimensionierung der Elemente gemäß Fig. 6 kann beispielsweise so erfolgen, daß eine Stegdicke (65) des Zungensteges (48) etwa 1 mm beträgt. Die Segmentlänge (60) kann etwa 1,1 mm bis 1,2 mm betragen. Eine Gesamtlänge (66) die sich aus der Partiallänge (61) und der Radialstegdicke (67) Zusammensetzt, beträgt etwa 1,9 mm. Für die Stegdicke (65) sind auch Werte in einem Intervall von etwa 0,8 mm bis 1,2 mm geeignet.

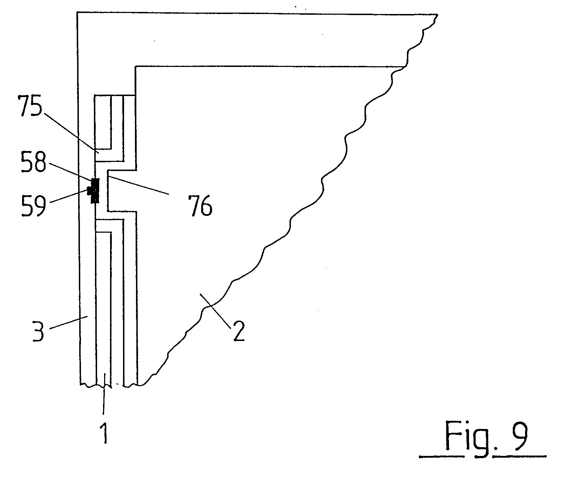

Alle in Fig. 1 bis Fig. 8 dargestellten Ausführungsformen sind jeweils alternativ oder ergänzend zu den Ausführungsformen in Fig. 9 bis Fig. 12 realisierbar. Es handelt sich somit bei jeder Ausführungsform um eigenständige und erfinderische Gestaltungen.

Fig. 9 zeigt in einer Draufsicht eine weitere Darstellung zur Verdeutlichung der Mitnahmeeinrichtung gemäß Fig. 5. Es ist erkennbar, daß im Bereich der Seitenwand der Unterschale (1) eine Ausnehmung (75) angeordnet ist, in die das Innenteil (2) mit einer Seitenwandprofilierung (76) eingreift. Mit Hilfe der Seitenwandprofilierung (76) ragt das Innenteil (2) bis in den Bereich der Oberschale (3), so daß ein Zusammenwirken der Führungsnut (58) und des Führungszapfens (59) ermöglicht wird.

Bei der Realisierung einer Mitnahmeeinrichtung beziehungsweise einer Rastung zur Vorgabe einer definierten Winkelpositionierung des Innenteiles (2) relativ zur Unterschale (1) und zur Oberschale (3) ist es bei einem Innenteil (2) zur Halterung von zwei oder mehreren Compact-Disc zweckmäßig, in zwei Schwenkstellungen des Innenteils (2) entsprechende Rastungen vorzusehen. Beispielsweise ist es möglich, bei einem Aufklappen der Oberschale (3) relativ zur Unterschale (1) mit einem Winkel von etwa 180° sowohl eine gerastete Winkelstellung des Innenteiles (2) relativ zur Unterschale (1) in einem Winkel von etwa 20°, als auch eine weitere angeschlagene Stellung des Innenteiles (2) in einem Winkel von etwa 20° zur Oberschale (3) vorzusehen. Dies erleichtert nochmals das Herausnehmen der Compact-Discs.

Das Innenschwenkgelenk (70) kann in unterschiedlichen Ausführungsformen realisiert werden. Beispielsweise ist eine Realisierung mit Zapfen möglich, die in entsprechende Ausnehmungen eingreift. Es ist aber ebenfalls denkbar, eine entsprechende Materialverjüngung ein Filmscharnier auszubilden.

Auch die CD-Kassete gemäß Fig. 10 bis Fig. 13 umfaßt eine Unterschale (1), einen Innenteil (2) und eine Oberschale (3). Die Unterschale (1) weist eine Bodenplatte (4) auf, an deren Kanten sich der Rückenwandteil (5), der vordere Wandteil (6), die Seitenwandstücke (7), Stege (8,9), sowie die Scharnier-Wandstücke (10) senkrecht aus der Bodenplattenebene erheben. Die Scharnierwandstücke (10) sind einstückig mit den Stegen (9) verbunden und stehen in Eckverbindung mit dem Rückenwandteil (5). Die Stege (8,9) sind bezüglich der Seitenwandstücke (7) etwas einwärts versetzt. Die Scharnier-Wandstücke (10) weisen je eine Bohrung (11) und eine Bohrung (12) auf, die zur Aufnahme der Scharnierzapfen der Oberschale beziehungswseise des Innenteils (2) dienen.

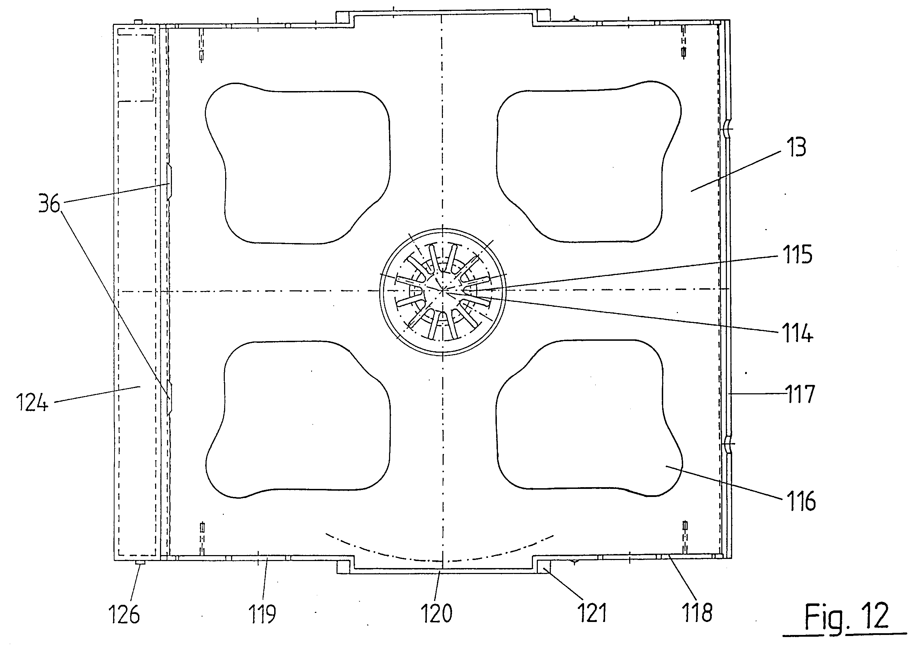

Der Innenteil (2) weist eine Halteplatte (13) auf, in deren Mitte eine Öffnung (114) angeordnet ist, in die von deren Rand her radial zu ihrer Mitte Halterungszungen (115) ragen (siehe Fig. 12), die zusätzlich in ihrem Endbereich axial beidseitig aus der Ebene der Lagerplatte herausragen (siehe Fig. 11) und so eine Einrichtung zur klemmenden Halterung einer CD in ihrem Mittelloch auf jeder Seite der Lagerplatte bilden. In der Lagerplatte sind vier Aussparungen (116) angeordnet, die auch in die nicht von einer eingesetzten CD überdeckten Eckbereiche der Halteplatte (13) ragen. Auch bei eingesetzter CD ist es daher möglich, in diese Aussparungen hineinzugreifen, um die CD an ihrer Außenkante zu fassen und von dem Innenteil (2) abzunehmen. An drei Seitenkanten der Halteplatte (13) sind Randstege (117,118,119) angeordnet, an zwei gegenüber liegenden Seitenkanten erstrecken sich Seitenwandstücke (120) auswärts. Diese Seitenwandstücke (120) sind trapezförmig ausgebildet und weisen abgeschrägte Ränder (121) auf, die im geschlossenen Zustand der Kassette mit den abgeschrägten Rändern (122) der Seitenwandstücke (7) der Unterschale (1) fluchten. An der rückwärtigen Seite der Halteplatte (13) ist eine einen stumpfen Winkel mit der Halteplatte (13) einschließende Schrägwand (123) angeordnet, die eine parallel zur Halteplatte (13) verlaufende, sich nach außen erstreckende Rückenrandplatte (124) trägt. Die Rückenrandplatte (124) trägt an ihren den Scharnier-Wandstücken (10) der Unterschale (1) zugewandter Enden zwei Scharnier-Wandteile mit je einem Scharnierzapfen (126), der in die Bohrungen (12) der Scharnier-Wandstücke (10) eingreifen. Die Scharnierwandstücke (125) des Innenteils (2) werden dabei von den Scharnier-Wandstücken (10) der Unterschale (1) umschlossen.

Der Abstand der Scharnierzapfen (126) von der rückwärtigen Kante (127) der Rückenrandplatte (124) ist kleiner als der Abstand der Bohrung (12) vom Rückenwandteil (5) und der Bodenplatte (4), so daß ein unbehindertes Umklappen des Innenteils (2) um die durch die Scharnierzapfen (126) und die Bohrungen (12) gebildete Achse möglich ist. Beim vollständigen Umklappen des Innenteils (2) schlagen die Stege (119) an der Oberkante des Rückenwandteils (5) an. Durch die versetzte Anordnung der Rückenrandplatte (124) mit den die Scharnierzapfen (126) aufweisenden Scharnier-Wandteilen (125) gegenüber der Ebene der Halteplatte (13) schlagen die Randstege (119) erst bei einem Umklappen um 180° oder mehr an den Rückenwandteil (5) an. Der Innenteil (2) ist daher wie eine Buchseite vollständig umklappbar.

Die Oberschale (3) weist eine Deckplatte (23) auf, an der sich an zwei gegenüberliegenden Kanten schmalseitige Wände (24) senkrecht aus der Deckplattenebene erheben. Diese schmalseitigen Wände (24) sind einstückig mit Scharnier-Wandteilen (25) verbunden, die nach innen ragende Scharnierzapfen (26) aufweisen. Der den Scharnier-Wandteilen (25) zugewandte Rand der Deckplatte (23) weist eine in die gleiche Richtung wie die schmalseitigen Wände (24) ragende Leiste (27) auf und schließt mit den Scharnier-Wandteilen (25) eine Aussparung (28) ein. An den schmalseitigen Wänden (24) sind sich einwärts erstreckende Haltenasen (29) angeordnet. Diese dienen zur Halterung einer in die Oberschale (3) eingeschobenen, hier nicht dargestellten Einlegekarte. Die Leiste (27) dient als Anschlag für diese Einlegekarte. Die schmalseitigen Wände (24) in Fig. 10 und Fig. 11 weisen je eine trapezförmige Aussparung (30) auf.

Die Scharnier-Wandteile (25) der Oberschale (3) umgreifen von außen die Scharnier-Wandstücke (10) der Unterschale (1). Die Scharnierzapfen (26) ragen dabei in die Bohrungen (11). Im geschlossenen Zustand der Kassette wird die Aussparung zwischen dem Rückenwandteil (5) und der Kante der Deckplatte (23), die die Leiste (27) aufweist, durch die Rückenrandplatte (124) des Innenteils (2) ausgefüllt. Die Seitenwandstücke (7) der Unterschale (1) und die Seitenwandstücke (120) des Innenteils (2) greifen formschlüssig in die Aussparungen (30) der schmalseitigen Wände (24) ein. Die Leiste (27) stützt sich auf Vorsprüngen (36) des Innenteils (2) (siehe Fig. 12) ab und erhöht so die Stabilität der geschlossenen Kassette.

Man erkennt in Fig. 10, daß aufgrund der voneinander unabhängigen Scharnieranordnungen zur Verbindung der Unterschale (1) mit dem Innenteil (2) einerseits und der Unterschale (1) mit der Oberschale (3) andererseits sich der Innenteil (2) zunächst separat mit CD-s bestücken läßt und anschließend in die Kassette eingesetzt werden kann.

Beim Öffnen der geschlossenen Kassette kann entweder nur die Oberschale (3) aufgeklappt werden, indem man deren schmalseitige Wände (24) ergreift, oder es kann gleichzeitig der Innenteil (2) mit aufgeklappt werden, in dem man dessen Seitenwandstücke (120) ergreift. Beim gleichzeitigen Aufklappen der Oberschale (3) und des Innenteils (2) verschieben sich diese beiden Teile aufgrund ihrer versetzten Scharnierachsen gegeneinander. Aufgrund der abgeschrägten Ränder (121) der Seitenwandstücke (120) verklemmen diese Seitenwandstücke (120) dabei nicht die Aussparungen (30), sondern gleiten aus diesen heraus und behindern somit die Klappbewegung nicht. Die schmalseitigen Wände (24) der Oberschale (3) weisen an ihrer Innenseite je eine Rastnase (31) auf, die mit Ausnehmungen (32) in den Stegen (8) der Unterschale (1) als Rastverschluß zusammenwirken. Die Randstege (118) des Innenteils (2) weisen Rastnasen (39) auf, die mit an den Innenseiten der Stege (8) der Unterschale (1) angeordneten Ausnehmungen (140) als Rastverschluß zusammenwirken. Ein versehentliches Öffnen der Kassette wird somit verhindert. Die Rastnasen (39) und Ausnehmungen (140) dienen gleichzeitig zur bessereren Halterung des Innenteils (2) beim automatischen Einsetzen in die Unterschale (1).

An der Unterseite der Halteplatte (13) des Innenteils (2) sind vier Stützfüße (141) (siehe Fig. 11) angeordnet, die sich beim Stapeln von mehreren Innenteilen (2) auf der Halteplatte (13) des jeweils darunterliegenden Innenteils (2) abstützen. Sie sind in der Nähe der Randstege (118,119) angeordnet und stoßen schon bei einer geringen seitlichen Verschiebung der gestapelten Innenteile (2) gegeneinander an diese Randstege (118,119) an. Sie bilden somit auch eine Seitenführung für die gestapelten Innenteile (2).

Fig. 13 zeigt eine andere Ausführungsform der erfindungsgemäßen Kassette. Die Unterschale (1) sowie der Innenteil (2) weisen hier keine Seitenwandstücke auf. Die schmalseitigen Wände (24) der Oberschale (3) sind hier ohne Aussparung durchgehend ausgebildet. Beim Öffnen dieser Kassette kann also zunächst nur die Oberschale (3) aufgeklappt werden, nicht aber gleichzeitig der Innenteil (2). Dieser muß nach dem Aufklappen der Oberschale (3) separat ergriffen und aufgeklappt werden. Bei dieser Ausführungsform weisen nur die Oberschale (3) und die Unterschale (1) zusammenwirkende Rastnasen (31) und Ausnehmungen (32) auf. Der Innenteil (2) und die Unterschale (1) besitzen keine zusammenwirkenden Rastverschlüsse, um das Aufklappen des jetzt ja nicht mehr an Seitenwandstücken greifbaren Innenteils (2) nicht zu erschweren.

Beide Typen von Innenteilen (2) lassen sich auf den herkömmmlichen Maschinen mit CD's bestücken und in die Unterteile (1) einsetzen.

## Patentansprüche

1. Kassette zur Aufbewahrung von Compact-Discs mit einer Unterschale, einer Oberschale und einem Innenteil, der in einer Scharnieranordnung klappbar zwischen der Unterschale und der Oberschale gehalten ist und bei der der Innenteil Einrichtungen zur klemmenden Haltung wenigstens einer Compact-Disc aufweist, dadurch gekennzeichnet, daß der Innenteil (2) ein Element eines modularen Systems ist, das als Elemente ein Einfach-Tray zur klemmenden Halterung einer Compact-Disc (71) im Bereich ihrer Mittelaussparung, ein Doppel-Tray zur klemmenden Halterung einer Compact-Disc (71) im Bereich ihrer Mittelaussparung, ein Seitenklemmelement mit einer Klemmnut (15) zur klemmenden Halterung einer Compact-Disc (71) im Bereich eines Teiles ihres Randes, ein Seitenklemmelement mit zwei Klemmnuten (15,16) sowie ein Seitenklemmelement mit drei Klemmnuten (15,16,17) aufweist und daß jedes Element wahlweise in die für jede Elementaufnahme gleich ausgebildete Unterschale (1) und Oberschale (3) einsetzbar ist.

2. Kassette zur Aufbewahrung von Compact-Discs mit einer Unterschale, einer Oberschale und einem Innenteil, der in einer Scharnieranordnung klappbar zwischen der Unterschale und der Oberschale gehalten ist und bei der der Innenteil Einrichtungen zur klemmenden Halterung wenigstens einer Compact-Disc aufweist, dadurch gekennzeichnet, daß der Innenteil (2) zur Halterung einer Compact-Disc (71) im Bereich deren Mittelaussparung Querstege (50) aufweist, die sich quer zu einer Halteplatte (13) des Innenteiles (2) erstrecken und entlang eines Umfanges einer Öffnung (114) angeordnet sind und daß die Querstege (50) abwechselnd in entgegengesetzten Richtungen mit Radialstegen (53) versehen sind, die ausgehend vom Quersteg (50) in Richtung auf einen Mittelpunkt der Öffnung (114) ausgerichtet sind und daß sich die Querstege (50) in die einander abgewandten Richtungen mit Querstegsegmenten (51,52) erheben, die im Bereich ihrer dem Mittelpunkt abgewandten Seiten beide eine Klemmprofilierung (62) zur Halterung der Compact-Disc (71) aufweisen.

3. Kassette nach Anspruch 2, dadurch gekennzeichnet, daß die Querstege (50) von Zungenstegen (48) gehaltert sind, die im wesentlichen in einer gemeinsamen Ebene mit einer Halteplatte (13) des Innenteiles (2) angeordnet sind.

4. Kassette nach Anspruch 2 oder 3, dadurch gekennzeichnet, daß die Querstegsegmente (51,52) senkrecht zur Halteplatte (13) etwa gleichdimensioniert sind.

5. Kassette nach einem der Ansprüche 1 bis 4, dadurch gekennzeichnet, daß zur Fixierung des Innenteiles (2) relativ zur Unterschale (1) in einer aufgeklappten Positionierung ein zu einer Rastausnehmung (45) korrespondierender Rastvorsprung (44) vorgesehen ist.

6. Kassette nach Anspruch 5, dadurch gekennzeichnet, daß der Rastvorsprung (44) im Bereich des Innenteiles (2) angeordnet ist und in einer geschlossenen Positionierung von einer Rastausnehmung (45) aufnehmbar ist, die im Bereich eines Seitenwandstückes (7) der Unterschale (1) angeordnet ist.

7. Kassette nach einem der Ansprüche 1 bis 6, dadurch gekennzeichnet, daß der Rastvorsprung (44) als Teil des Seitenwandstückes (7) ausgebildet ist und in einer geöffneten Positionierung des Innenteiles (2) in eine Rastausnehmung (45) eingreift, die im Bereich des Innenteiles (2) angeordnet ist.

8. Kassette nach einem der Ansprüche 1 bis 7, dadurch gekennzeichnet, daß das Innenschwenkgelenk (70) einen Versatz zum Innenscharnier (57) aufweist, mit dem der Innenteil (2) verschwenkbar mit den Schalen (1,3) verbunden ist.

9. Kassette nach einem der Ansprüche 1 bis 8, dadurch gekennzeichnet, daß der Innenteil (2) über einen in eine Führungsnut (58) eingreifende Führungszapfen (59) während einer Öffnungs- und Schließbewegung mit der Oberschale (3) verbunden ist und daß der Innenteil (2) im Bereich einer Seitenwandprofilierung (76) eine Ausnehmung (75) im Bereich der Unterschale (1) in Richtung auf die Oberschale (3) durchdringt.
